Europäisches Patentamt

European Patent Office

Office européen des brevets

(19)

(11) Publication number: **0 243 633**
**A2**

(12) **EUROPEAN PATENT APPLICATION**

(21) Application number: **87103499.7**

(22) Date of filing: 11.03.87

(51) Int. Cl.⁴: **B65G 47/14**

(30) Priority: **12.03.86 US 838837**

(43) Date of publication of application:
**04.11.87 Bulletin 87/45**

(84) Designated Contracting States:
**AT BE CH DE ES FR GB IT LI LU NL SE**

(71) Applicant: **HOPPMANN CORPORATION**
**14560 Lee Road P.O. Box 601**
**Chantilly Virginia 22021(US)**

(72) Inventor: **Hoppmann, Kurt H.**
**3616 Ridgeway Terrace**
**Falls Church, VA 22044(US)**
Inventor: **Lin, James G.**
**7302 Skibbereen Place**
**Springfield, VA 22153(US)**
Inventor: **Schmitt, Werner H.**
**6385 Lakeview Drive**
**Falls Church, VA 22021(US)**

(74) Representative: **Patentanwälte Kirschner &**
**Grosse**
**Herzog-Wilhelm-Strasse 17**
**D-8000 München 2(DE)**

(54) **A bowl for a radial orientor feeder.**

(57) A bowl is provided for storing and discharging articles in a radial orientor. A base member is provided having a cone shaped upper surface with an outer peripheral edge. An upwardly projecting sidewall is affixed to the outer peripheral edge of the base for defining a receiving bowl between the cone shaped upper surface of the base and the upwardly projecting sidewall. A plurality of elevating bars are affixed to an inner circumferential surface of the upwardly projecting sidewall for assisting in discharging articles from the receiving bowl. A rim is affixed to an upper edge of the upwardly projecting sidewall for receiving articles from the receiving bowl.

EP 0 243 633 A2

FIG. 4

# A BOWL FOR A RADIAL ORIENTOR FEEDER

## BACKGROUND OF THE INVENTION

### Field of the Invention

The present invention is directed to a bowl for use with sorting and discharging articles in a radial orientor feeder.

### Description of Background Art

Hithertofore, bowls used in centrifugal and radial orientor feeders included a base member and an upwardly projecting sidewall affixed thereto. The sidewall was smooth for merely retaining the articles within the bowl. A plurality of articles positioned within the bowl had to be monitored for controlling a preferred number of articles positioned within the bowl for supplying the articles to a rim affixed to an upper edge of the upwardly projecting sidewall. A preferred number of articles were disposed within the bowl to assist the articles in being conveyed upwardly on a stationary ramp attached to the feeder frame for guiding the articles upwardly onto the rim.

## SUMMARY AND OBJECTS OF THE PRESENT INVENTION

It is an object of the present invention to provide a feeder bowl which includes a plurality of elevating bars being affixed to an inner circumferential surface of an upwardly projecting sidewall for assisting in discharging articles from the receiving bowl.

A further object of the present invention is to provide a base member having a cone-shaped upper surface for assisting in the positioning of the articles adjacent to the upwardly projecting sidewall so as to permit the articles to engage the elevating bars for discharge from the feeder bowl upwardly by means of a stationary ramp onto a rim affixed to an upper edge of the upwardly projecting sidewall.

It is another object of the present invention to provide a plurality of holes spaced around the rim portion of the bowl. A plurality of scallops are provided wherein an individual scallop is removably secured to one of the holes in the rim for defining a channel between adjacent scallops for positioning an articles therebetween.

A still further object of the present invention is to provide a bowl wherein the elevating bars affixed to an inner circumferential surface of the upwardly projecting sidewall have a cross-sectional configuration which may be square, rectangular, triangular, scalloped, semicircular or U-shaped.

The objects of the present invention are achieved by providing a bowl for use with storing and discharging articles in a radial orientor. A base is provided having a cone shaped upper surface and an outer peripheral edge. An upwardly projecting sidewall is affixed to the outer peripheral edge of the base for defining a receiving bowl between said cone shaped upper surface of said base and said upwardly projecting sidewall. A plurality of elevating bars are affixed to an inner circumferential surface of the upwardly projecting sidewall for assisting and discharging articles from the receiving bowl. A rim is affixed to an upper edge of the upwardly projecting sidewall for receiving articles from the receiving bowl.

Further scope of applicability of the present invention will become apparent from the detailed description given hereinafter. However. it should be understood that the detailed description and specific examples, while indicating preferred embodiments of the invention, are given by way of illustration only, since various changes and modifications within the spirit and scope of the invention will become apparent to those skilled in the art from this detailed description.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Figure 1 is a top plan view illustrating the bowl design of the present invention;

Figure 2 is a cross-sectional view of the bowl illustrated in Figure 1;

Figure 3 is a partial sectional view taken along section A-A as shown in Figure 1;

Figure 4 is a perspective view showing the bowl design of the present invention;

Figure 5 is a partial cross-sectional view of the upwardly projecting sidewall illustrating a triangularly shaped elevating bar;

Figure 6 is a partial cross-sectional view of the upwardly projecting sidewall illustrating a semicircular elevating bar;

Figure 7 is a partial cross-sectional view of the upwardly projecting sidewall illustrating scalloped elevating bars;

Figure 8 is a partial cross-sectional view of the upwardly projecting sidewall illustrating a series of semicircular elevating bars;

Figure 9 is a partial cross-sectional view of the upwardly projecting sidewall illustrating U-shaped elevating bars; and

Figure 10 is a partial cross-sectional view illustrating a modified bowl design wherein the upwardly projecting sidewall is angled relative to the rim.

## DETAILED DESCRIPTION OF THE PRESENT INVENTION

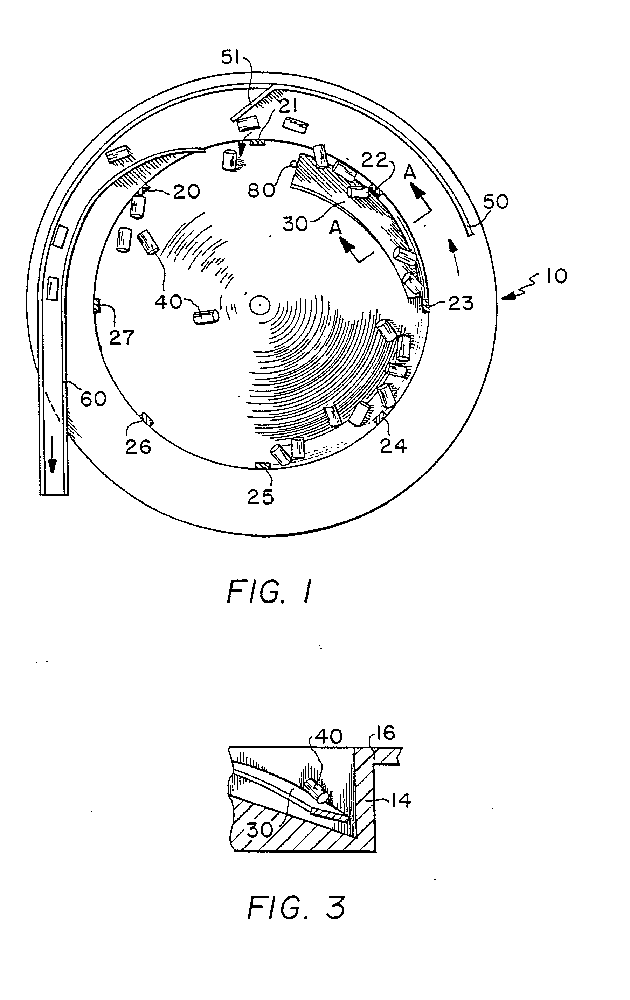

As illustrated in Figures 1, 2 and 4, the bowl 10 of the present invention includes a base member 12 having a cone shaped upper surface. An upwardly projecting sidewall 14 is affixed to an outer peripheral edge 13 of the base member 12. A rim 16 is affixed to an upper edge 15 of the upwardly projecting wall 14. A plurality of bars 20, 21, 22, 23, 24, 25, 26, and 27 are arranged around an inner circumferential surface of the bowl 10. The elevating bars 20-27 may be removably secured to the upwardly projecting wall 14 of the bowl 10.

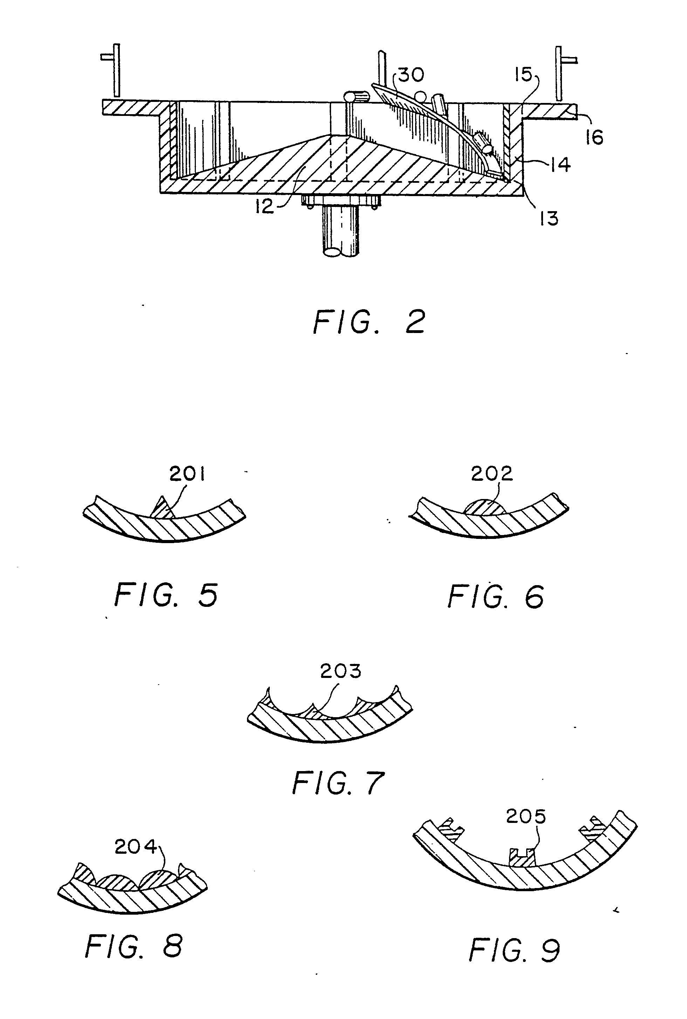

As illustrated in Figure 1 a stationary ramp 30 is provided adjacent to the inner circumferential surface of the upwardly projecting sidewall. Articles 40 disposed within the feeder bowl 10 are transported by means of rotating the feeder bowl so as to be conveyed upwardly on the stationary ramp 30. As illustrated in Figure 2, articles conveyed to an upper portion of the stationary ramp 30 are transferred onto the rim 16.

A stationary wall 50 is provided adjacent to the transfer section of the rim. In addition, a qualifying bar 51 is mounted to the stationary wall 50 so as to return articles 40 to the feeder bowl 10 if they are not positioned in the right orientation relative thereto. As articles 40 are conveyed on the rim 16, a guide wall 60 functions together with the stationary wall 50 so as to discharge the articles for further processing.

As illustrated in Figure 2, the bowl 10 is connected to a shaft 70 for imparting rotation thereto. In operation, articles 40 supplied to the feeder bowl 10 fall by means of gravity on the cone shaped upper surface 12 to engage the upwardly projecting sidewall 14. As the feeder bowl 10 rotates, the articles 40 are moved not only by the rotation of the feeder bowl 10, but also by assistance from the plurality of elevating bars 20-27. As the articles are transported around the feeder bowl 10, they eventually engage the stationary ramp 30. Thereafter, the frictional forces between the upwardly projecting sidewall 14 and the articles 40 assist the articles in being conveyed upwardly on the stationary ramp 30. In addition, the plurality of elevating bars 20-27 actually assist in transporting the articles 40 upwardly on the stationary ramp 30. As the articles reach the upper portion of the stationary ramp 30, they fall by means of gravity onto the rotating rim 16. In addition, a rod 80 is provided to ensure that all articles on the stationary ramp 30 are discharged therefrom.

As the feeder bowl 10 continues to rotate, the articles are qualified on the rim 16. The qualifying bar 51 returns articles which are not in the correct orientation back into the feeder bowl 10. Articles which are properly qualified on the rim 16 are transported between the stationary wall 50 and the guide wall 60 to be further processed.

Figure 3 illustrates a cross-sectional view taken along section A-A of Figure 1. In this view, the stationary ram 30 is illustrated as being sloped towards the upwardly projecting side wall 14. In this manner, the articles 40 disposed on the stationary ramp 30 fall by means of gravity towards the upwardly projecting sidewall 14. Thus, the frictional forces between the upwardly projecting sidewall 14 and the articles 40 together with assistance from the elevating bars 20-27 enable even a single article disposed within the feeder bowl 10 to be transported upwardly on the stationary ramp 30 for eventually positioning of the article 40 onto the rim 16. No additional articles are required in order to push the articles 40 upwardly as has been hithertofore necessary. In other words, a quantity of articles can be positioned into the feeder bowl without the necessity of monitoring the quantity to be within a predetermined range. Even if a few, or even a single articles is positioned within the feeder bowl 10, it will be transported upwardly on the stationary ramp 30 to thereafter be disposed on the rim 16.

Figure 4 illustrates a perspective view of the feeder bowl 10. The rim 16 is illustrated as being connected to the upwardly projecting sidewall 14. The plurality of elevating bars 20-27 are mounted around an inner circumferential surface of the upwardly projecting sidewall 14. A shaft 70 is provided for imparting rotation to the cone shaped upper surface 12 of the feeder bowl 10.

Figures 5-9 illustrate modifications of the shape of the elevating bars. As illustrated in Figure 5, the elevating bar 201 may be triangular in cross section. Figure 6 illustrates a semicircular elevating bar 202. As illustrated in Figure 7, a plurality of scallop shaped elevating bars 203 may be provided. Figure 8 illustrates a plurality of adjacent semicircular elevating bars 204. Figure 9 illustrates substantially U-shaped elevating bars 205. The present invention is not limited to the specific shape of the elevating bars as set forth herein. Any elevating bar, regardless of shape, may be provided for assisting in the transport of articles 40 from the feeder bowl upwardly on the stationary ramp 30.

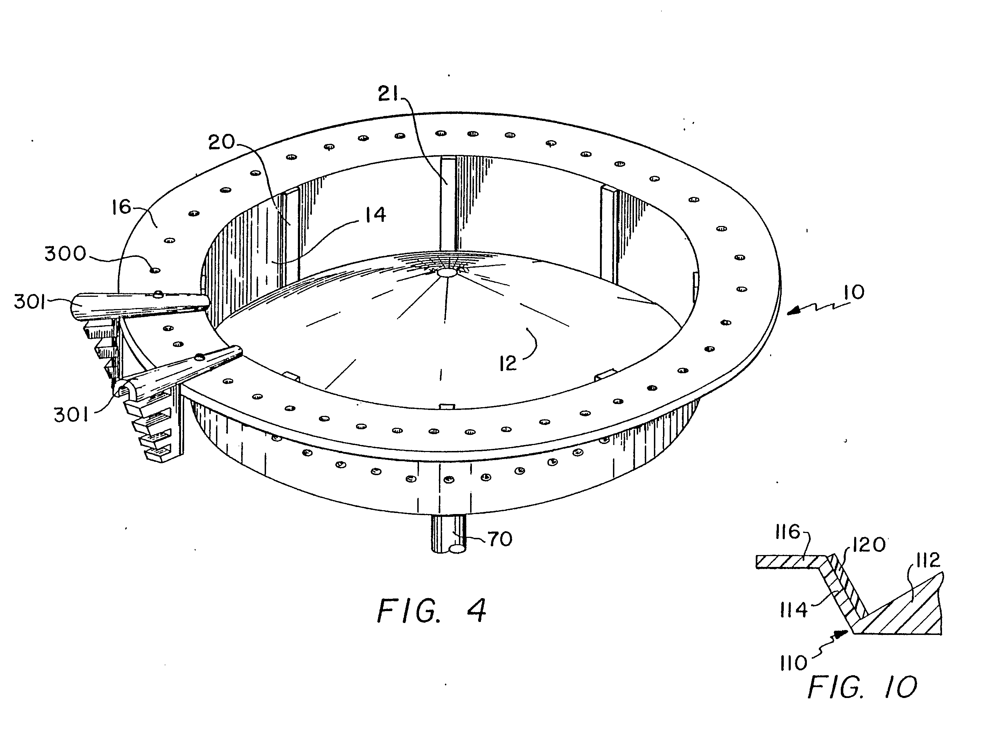

Figures 1-4 illustrate an orthogonal relationship between the upwardly projecting sidewall 14 and the rim 16. In addition, the feeder bowl 10 has a lower surface which is orthogonal with regard to the upwardly projecting sidewall 14. Figure 10 illustrates another modification of the present invention wherein the upwardly projecting sidewall 114 is disposed at an angle with regard to the rim 116. A feeder bar 120 is disposed on the inner circumferential surface of the upwardly projecting sidewall 114. A cone shaped upper surface 112 is provided on the feeder bowl 110. The specific angle between the upwardly projecting sidewall 114 relative to the rim 116 and the base of the feeder bowl 110 may be within any predetermined range which is suitable for assisting in the discharge of articles from the feeder bowl 10 upwardly on a stationary ramp for eventual discharge onto the rim 116.

As illustrated in Figure 4, the rim 16 includes a plurality of holes 300 disposed around the rim 16. In one embodiment of the present invention, 360 holes are provided around the rim 16. Scallops 301 are mounted to the rim 16 by means screws·which are engaged within individual holes 300 disposed in the rim 16. In this manner, the scallops 301 can be positioned around the rim 16 in any predetermined orientation depending the size of the article 40. Thus, any predetermined spacing between adjacent scallops 301 can be arranged by merely unscrewing a particular scallop and rearranging the scallop relative to an adjacent scallop by securing the scallop 301 in a particular hole 300 in the rim 16. By providing 360 holes equally spaced around the rim 16, a universal bowl 10 is provided which may be employed to sort any particular size and shape of article 40 supplied thereto. In a preferred embodiment of the invention, the 360 holes disposed around the rim 16 are spaced one half of an inch apart relative to each other. Thus, universal scallops 301 and a universal feeder 10 may be provided which can be quickly and simply modified by rearranging the positioning of the scallops 301 depending on the particular object being processed. Scallops can be secured on the rim at any spacing by means of clamping the scallops without using holes.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A bowl for use with storing and discharging articles in a radial orientor comprising:

a base having a cone shaped upper surface and including an outer peripheral edge;

an upwardly projecting sidewall affixed to said outer peripheral edge of said base for defining a receiving bowl between said cone shaped upper surface of said base and said upwardly projecting sidewall;

a plurality of the elevating bars being affixed to an inner circumferential surface of said upwardly projecting sidewall for assisting in discharging articles from said receiving bowl; and

a rim affixed to an upper edge of said upwardly projecting sidewall for receiving articles from said receiving bowl.

2. A bowl according to claim 1, wherein said plurality of elevating bars are arranged in a vertical orientation for assisting in discharging articles from said receiving bowl.

3. A bowl according to claim 1, wherein said upwardly projecting sidewall is orthogonally affixed to said base.

4. A bowl according to claim 1, wherein said upwardly projecting sidewall is affixed to said base at an angle greater than 90°.

5. A bowl according to claim 1, wherein said rim includes a plurality of holes spaced around an outer peripheral surface thereof.

6. A bowl according to claim 5, and further including a plurality of scallops, each scallop being removably secured to a hole in said rim for defining a channel between adjacent scallops for positioning an article therebetween.

7. A bowl according to claim 5, wherein 360 holes are equally spaced around the outer peripheral surface of said rim.

8. A bowl according to claim 7, wherein a plurality of scallops are secured on the rim at any spacing by means of clamping other than holes.

9. A bowl according to claim 6, wherein said plurality of scallops are substantially uniform in shape and size for forming substantially uniform channels of a predetermined size for accommodating distinct articles.

10. A bowl according to claim 1, wherein said elevating bars are rectangular in cross section.

11. A bowl according to claim 1, wherein said elevating bars are triangular in cross section.

12. A bowl according to claim 1, wherein said elevating bars are semicircular in cross section.

13. A bowl according to claim 1, wherein said elevating bars are scalloped in cross section.

14. A bowl according to claim 1, wherein said elevating bars are U-shaped in cross section.

15. A bowl according to claim 1, wherein said elevating bars are removably secured to said upwardly projecting sidewall.

FIG. 1

FIG. 3

FIG. 2

FIG. 5

FIG. 6

FIG. 7

FIG. 8

FIG. 9

FIG. 4

FIG. IO

0 243 633